# EUROPEAN PATENT APPLICATION

(11) **EP 3 379 461 A1**
(43) Date of publication of application: **26.09.2018**
(21) Application number: 17169856.6
(22) Date of filing: 08.05.2017
(51) Int. Cl.: G06K 9/62, G06N 99/00, G06T 11/20, G06F 17/30

(54) **METHOD FOR COMPUTER-ASSISTED DETERMINATION OF THE PERFORMANCE OF A CLASSIFICATION MODEL**

(30) Priority: 21.03.2017 WO PCT/EP2017/056657
(71) Applicant: Siemens Aktiengesellschaft, 80333 München (DE)
(72) Inventor: Oelke, Daniela, 85521 Riemerling (DE); Donald, John Andrew, 85635 Höhenkirchen-Siegertsbrunn (DE); Mittelstädt, Sebastian, 81541 München-Haidhausen (DE)

(57) **Abstract**

The invention relates to a method for computer-assisted determination of the performance of a classification model representing a technical state of a technical system, wherein the classification model consists of a plurality of multi-dimensional feature vectors (A, B, C, D, E) in a multi-dimensional space, wherein each of the feature vectors (A, B, C, D, E) represents a set of measurement values at a certain location out of a plurality of locations of the technical system that result from a simulated or a real contingency. The method provides a transformation instruction and transforms each set of measurement values of a certain state of the technical system at a certain location into a feature vector (A, B, C, D, E) by means of the transformation instruction, resulting in the classification model with the plurality of multi-dimensional feature vectors. Furthermore, the method visualizes values of at least some of the feature vectors on an output means using a parallel coordinate plot-visualization technique for an analysis of a user and reads an adapted transformation instruction in response of a user input of a user interface resulting from the analysis.

## Description

The invention relates to a method for computer-assisted determination of the performance of a classification model representing a technical state of a technical system.

Classification models have to be developed and trained before they can be applied to a technical system. Generally, for a successful application of a classification model for use in a technical system it is crucial that classification data is meaningful with respect to a classification goal.

Typically, a classification model is tested with training data resulting in accuracy values indicating a percentage of wrong or correctly classified samples. This provides information about the overall quality of a used classifier but does not provide insight what causes a low quality or how the classification model could be further improved. For instance, accuracy values do not reveal if the classification model is weak in general or if there are only problems with certain areas in the technical system.

It is therefore an object of the present invention, to provide a method for computer-assisted determination of the performance of a classification model which represents a technical state of a technical system.

This object is solved by a method according to the features of claim 1, computer system according to the features of claim 20 and a computer program product according to the features of claim 21. Preferred embodiments are set out in the dependent claims.

The invention provides a method for computer-assisted determination of the performance of a classification model representing a technical state of a technical system. Although the technical domain is not limited to a specific technology, the technical system can, for example, relate to the field of wide-area monitoring of electrical grids.

The classification model consists of a plurality of multi-dimensional feature vectors in a multi-dimensional space, wherein each of the feature vectors represents a set of measurement values at a certain location out of a plurality of locations of the technical system that result from a simulated or real contingency. The method comprises the steps of providing a transformation instruction; transforming each set of measurement values of a certain state of the technical system at a certain location into a feature vector by means of the transformation instruction, resulting in the classification model with the plurality of multi-dimensional feature vectors; visualizing values of at least some of the feature vectors on an output means using a parallel coordinate plot-visualization technique for an analysis of a user; and reading an adapted transformation instruction in response to a user input of a user interface resulting from the analysis.

The method according to the invention helps to retrain and reconfigure an arbitrary classification model if it is to be adapted to a specific technical system or used on a different technical system. The visualization by means of a parallel coordinate plot-visualization technique enables an improved understanding of the performance of the analyzed classification model. It provides an effective means to evaluate, improve and explore the classification model before it is applied in a real technical system.

The method according to the invention helps, for example a machine learning expert, to improve the accuracy of the classification algorithm which leads to an overall better performance of the technical system. Thus, it enhances the operation and failure detection of the technical system in which the improved algorithm is applied.

The method makes the uncertainty of the automatic algorithm visible. It thereby also provides an increasing transparency which increases trust in the algorithms.

Once the classification model is trained, the system can be used to gain a better understanding of the characteristics of the technical system, thereby revealing strengths and weaknesses of the technical system. The gained knowledge may lead to targeted investments in the technical system, such as a power distribution grid.

The method according to the invention is helpful in all cases in which a classification model has to be tested or inspected by domain experts. In particular, the method is helpful with those classification models whose decision is based on the similarity of the objects in a feature space. This includes the visual evaluation and inspection of a feature extraction. The goal of a feature extraction process is to represent real world properties in a feature space that then is used as a basis for classification. Therefore, the method can be applied to a variety of technical scenarios, e.g. information retrieval systems for documents, recommendation lists in data basis, or augmented reality systems for technical services where the classification recognizes the most similar components which are looked by a technician and adds information accordingly.

The parallel coordinate plot-visualization technique may use a visualization, in which the distribution of similarity values between a particular feature vector as a reference feature vector in the high-dimensional vector space and all other feature vectors is visualized by representing each similarity values by graphical sign. Analyzing the distribution of similarity values between feature vectors enables an effective evaluation of the performance of the classification model.

According to a first embodiment, the parallel coordinate plot-visualization technique uses a distribution plot, in which the distribution of similarity values between a particular feature vector as a reference feature vector in the high-dimensional vector space and all other feature vectors is visualized by representing each similarity value between two parallel axes having the same scale. Using a distribution plot, feature vectors of the same and/or different types of contingencies may be evaluated. The distribution in a distribution plot makes it easier to evaluate the performance of a classification model and the decision whether to adapt a transformation instruction for recalculating the transformation of each set of measurement values.

When using a distribution plot, each feature vector belongs to a specific type of contingency that occurs in the technical system. Furthermore, all similarity values, irrespective of the type of contingency, are drawn in a common bar of the distribution plot. Alternatively, the similarity values are split up into a first and a second category wherein values of a certain type of contingency are assigned to the first category and values of the remaining types of contingency are assigned to the second category, the values of the first category are drawn in a first bar and the values of the second category are drawn in a second bar neighboring the first bar. The latter alternative is helpful if one has to find out whether a nearest neighbor of a point in the classification space is of the same category or another category and what the local neighborhood of a point looks like in terms of categories of the values.

According to a further preferred embodiment, each contingency is represented by a single distribution plot. To ease evaluation, the distribution plots may be arranged in an array. This makes it possible to find out whether the contingencies of a specific type are close to other points or not. Furthermore, in such a visualization a misclassification can be realized easily.

According to a second embodiment, the parallel coordinate plot-visualization technique uses a ranking plot, in which the distribution of similarity values between a particular feature vector as a reference feature vector in the high-dimensional vector space and all other feature vectors is visualized by representing each similarity value between two parallel axes representing different feature vectors of the same type of contingency. The main difference between the distribution plot and the ranking plot is that the axes of the ranking plot represent different data sets, whereas the axes of the distribution set represent the same data set. Yet, still each line represents one contingency. This enables a comparison of feature vectors which have been generated during different times, for example one before the occurrence of a contingency and the other after the occurrence of the contingency.

According to a first alternative of the ranking plot, a first axis of the ranking plot represents the similarities between a particular first feature vector as a reference feature vector in the high-dimensional vector space and all other feature vectors of a first set of feature vectors and the second axis of the ranking plot represents the similarities between a particular second feature vector as a reference feature vector in the high-dimensional vector space and all other feature vectors of a second set of feature vectors.

As a second alternative of the ranking plot, a first axis of the ranking plot represents the similarities between a particular first feature vector as a reference feature vector in the high-dimensional vector space and all other feature vectors of a first set of feature vectors and a second axis of the ranking plot represents the similarities between a particular second feature vector as a reference feature vector in the high-dimensional vector space and all other feature vectors of the first set of feature vectors.

The first alternative allows a comparison of two feature sets to each other. The second alternative enables a comparison of a query vector to a feature set.

In this regard, each contingency is represented by a single ranking plot.

According to a third embodiment, the parallel coordinate plot-visualization technique uses a delta plot, in which the temporal development of the distribution of similarity values between at least three feature vector sets is visualized by forming an ordered series of distribution plots. A delta plot puts the focus on the development of similarity values across different feature vector sets. It is thereby assumed that the different feature vector sets form an ordered series, while the technical system is undergoing a predetermined change of one of a specific parameter. Delta plots show a delta to some value, namely the delta to the distance to the correct contingency. This enables the evaluation how often the step of transforming each set of measurement values of a certain state of the technical system at a certain location into a feature vector by means of the transformation instruction has to be made. Below, this transformation is referred to be a simulation. This information is important with respect to the information to ensure meaningful results of the classification algorithm. Instead of determining the minimum regular interval for recalculations, recalculation or re-simulation could also be triggered by changes of certain network characteristics. For example, the behavior of a specific parameter of the technical system can be used as a trigger for recalculating the simulation.

A first of the at least three different feature vector sets is a reference data set whose values are visualized by a distribution plot, in which the distribution of reference similarity values between a particular feature vector as a reference feature vector in the high-dimensional vector space and all other feature vectors of the reference data set is visualized by representing each similarity value between two parallel axes. The remaining of the at least three different feature vector sets represent the distribution of the similarity values under a respective predetermined change of the technical system.

In the delta plot, a subsequent data set following the reference data set or a previous data set visualizes the distances between a value of the reference feature vector of the subsequent data set and all other values of the reference data set, wherein a respective calculated reference distance is subtracted from each distance value. This enables an easy detection of wrong predictions.

A frequency at which the step of transforming each set of measurement values of a certain state of a technical system at a certain location into a feature vector by means of a transformation instruction, i.e. a simulation, may be determined from the analysis of the temporal development of the distribution of similarity values. As noted above, the time of a new simulation can also be triggered by changes of certain technical system characteristics, such as significant changes in the topology, load changes, and so on. This kind of visualization enables to estimate the thresholds for those values after a re-simulation has to be triggered.

According to a further embodiment, the visualization is adapted in response to a user input. The adaption of the visualization comprises removing and/or highlighting and/or filtering and/or ordering and/or enlargements or detailed views of displayed plots and/or values in the visualization.

The adaption of the visualization enables an easier understanding of the behavior of the classification model and, if necessary, an adaption of the transformation instruction for improving the classification model.

The invention further comprises a computer system comprising means for carrying out the method described herein.

Furthermore, a computer program product directly loadable into the internal memory of a digital computer, comprising software code portions for performing the steps of the method as described herein when said product is run on a computer, is suggested. The computer program product may be in the form of a USB stick, a CD-ROM, a DVD or a downloadable file which can be transferred wireless or wired via a communication network.

The invention will be explained more detailed by reference to the accompanying figures.
- Fig. 1: shows an illustration of a distribution of feature vectors in a simplified x-y-diagram which forms the basis for establishing an exemplified distribution plot;
- Fig. 2: shows an exemplary distribution plot consisting of one bar;
- Fig. 3: shows an exemplary distribution plot consisting of two bars;
- Fig. 4: shows a plurality of distribution plots for different contingencies being arranged in an array;
- Fig. 5: shows a plurality of distribution plots in a 2-bar-view for different contingencies where those distribution plots are marked which are not suitable for being used for an evaluation of the technical system;
- Fig. 6: shows a schematic view of establishing a ranking plot;
- Fig. 7: shows a number of different ranking plots for different contingencies arranged in a line;
- Fig. 8: shows a schematic diagram of the evaluation of a delta plot;
- Fig. 9: shows a number of delta plots for different contingencies being arranged in an array;
- Fig. 10: shows an example for an impedance stripe; and
- Fig. 11: shows an exemplary visualization of an array of a plurality of delta plots for different contingencies together with graphical means for adapting and filtering of information for the determination of the performance of a used classification model.

The below described method for computer-assisted determination of the performance of a classification model which represents a technical state of a technical system will be described, by way of examples only, for wide-area monitoring of electrical grids. Such a monitoring is done via Phasor Measurement Units (PMUs) which are distributed over the electrical grid. If a contingency occurs in the electrical grid, this can be seen in the measurement values of the PMUs. In such a situation, it is crucial that the type and the location of the contingency can quickly be identified in order to decide if and what action has to be taken. The classification model whose performance shall be determined by the below-described method enables answering these questions.

It is known that each contingency causes specific patterns of value changes in the PMU measurements. To identify the type and location of a contingency simulation data shall be used to automate the identification. The expected development of the PMU values can be calculated in a predetermined time interval, for example, every 15 minutes. However, the time interval for recalculating simulated PMU values for each potential contingency can be set to another value as well. The expected development of the PMU values will be used to build the classification model. If a real contingency occurs within the next minutes, the real PMU values can be compared to the simulated ones, assuming that the most similar simulation values that occurred have a type and location that is similar or even the same as the contingency that was causing the observed change of PMU values.

Building the classification model is done by first representing the PMU values that are caused by a simulated or real contingency as a multi-dimensional feature vector. These feature vectors represent points in a multi-dimensional space. The classification may be done via a nearest neighbor classifier. If a contingency occurs, the PMU values of the network at this point in time are also transformed in a feature vector representation. Thus, the occurring contingency can also be represented as point in the multi-dimensional space. Thereby, it is possible to calculate distances between this point and all other points which represent different contingencies which were simulated based on an earlier network state. The assumption of the nearest neighbor classifier is that the points that are close to the point representing the current network state likely also represent contingencies of a similar or the same type and location.

The success of this proceeding is a result of the performance of the classification model representing a technical state of the technical system.

A classification model used for this procedure has to be developed and trained before it can be applied. In particular, the transformation of the PMU values of a certain network state into a feature vector leaves room for variation. For example, in the case of wide-area monitoring of electrical grids a plurality of values per PMU with a development over time has to be considered. However, for a successful application of the technique it is crucial that the points in space and the relative positions to each other are meaningful with respect to the classification goal.

If a classification model can be successful used for a specific type of electrical grid, the same classification model may not be useful for a different type or another electrical grid. Hence, the classification model has to be retrained, in case it is transferred to a new network and potentially reconfigured.

Currently, data simulating the network state after one of the potential contingencies occurred is calculated, for example, every 15 minutes. Thereby the network state (i.e. the state of the electrical grid) at this time is used as a basis for the simulation. However, this simulation is a costly calculation. It would be therefore desirable to be able to determine the frequency at which the simulations have to be recalculated to ensure meaningful results of a transformation instruction being the basis for building the classification model.

For the determination of the performance of a classification model which represents a technical state of the mentioned electrical grid different visualization techniques are used to support the analysis of the classification model. All visualization techniques are using parallel coordinate plots. Basically, the method comprises the steps of providing a transformation instruction; transforming each set of measurement values of a certain state of the wide-area electrical grid at a certain location into a feature vector by means of a transformation instruction, resulting in the classification model with the plurality of multi-dimensional feature vectors; visualizing values of at least some of the feature vectors on an output means using the aforementioned parallel coordinate plot-visualization technique for an analysis of a user; and reading an adapted transformation instruction in response of a user input of a user interface resulting from the analysis.

In the following, the visualization of values will be explained in more detail enabling analysis of the transformation instruction and the performance of the classification model.

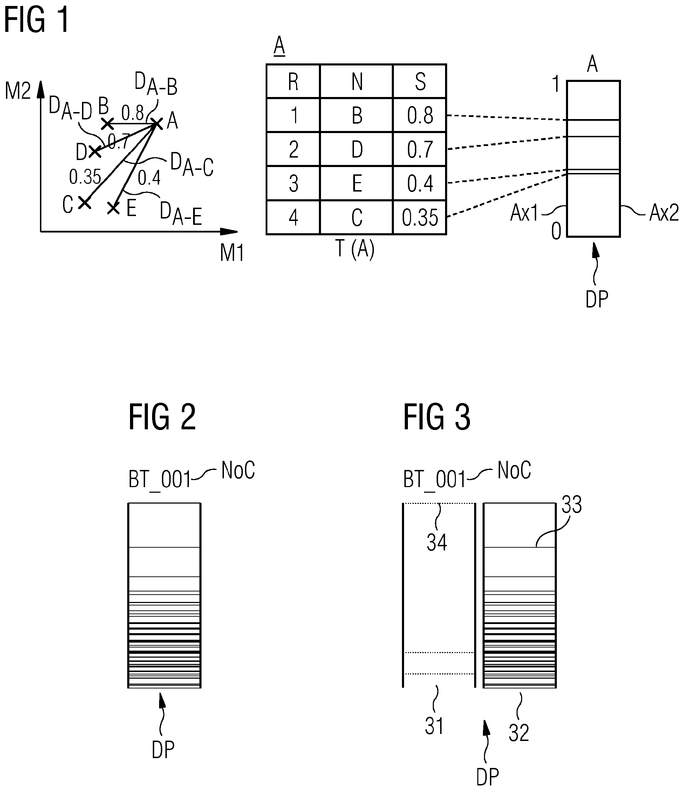

According to a first embodiment, a distribution plot may be used to visualize values of the feature vectors. A distribution plot DP (Figs. 1, 2, 3, 4 and 5) shows the distribution of values by representing each value as a horizontal line that is drawn between two axes Ax1, Ax2. The height that a line is drawn at depends on the value it represents and the scaling of the axes Ax1, Ax2. For example, if the axes Ax1, Ax2 range from 0 to 1 in a linearly scale (Fig. 1), a value of 0.5 would be drawn as a line that connects both axes in the middle. This can be seen in the distribution plot DP in Fig. 1, right hand side.

The drawn values (i.e. lines) are similarity values between a particular point of a multi-dimensional vector space and all other points in this space. The x-y-diagram on the left hand side of Fig. 1 illustrates an exemplary 2-dimensional feature space with the two features M1 and M2. Illustrated are four feature vectors A, B, C, D, E which are distributed in the feature space. The point denoted with A represents a reference contingency. The reference contingency A has a distance D_{A-i} (i = B, C, D, E) with respect to all other contingencies B, C, D, E. These points in the multi-dimensional space represent a certain contingency that can occur in the technical system. Each of these points A, B, C, D, E belongs to a specific category, such as a contingency type (for example, short circuit, transformer outage, line outage, etc.). The contingency or point A for which the values in the table in Fig. 1 are calculated is called the reference contingency or reference point. As mentioned, A represents the reference contingency. In the x-y-diagram of Fig. 1, the distances D_{A-I} between the reference contingency A and all other contingencies B, C, D, E are denoted. For this information, a table T(A) can be established.

The table T(A) has an information about a rank R, the name of the contingency N and a similarity value S. With regard to reference contingency A the contingency B is the closest point in the feature space. The similarity value S = 0.8 which corresponds to the distance D_{A-B}. Therefore, contingency B has rank 1. Contingency D has the second rank with a similarity value S = 0.7, i.e. D_{A-D} = 0.7. Contingency E is ranked number 3 with a similarity value S = 0.4. Contingency C is ranked number 4 with a similarity value S = 0.35 meaning that contingency C has the biggest distance D_{A-C} to reference contingency A. In other words, the table T(A) orders the contingencies B, C, D, E with regard to its distance compared to reference contingency A in a descending order. From this information in table T(A) the distribution plot DP can be established.

As already explained and easily can be seen from Fig. 1, in the distribution plot, the similarity values S are represented as horizontal lines between axes Ax1 and Ax2. On the top of the row the name of the reference contingency, i.e. "A" is displayed.

It is apparent to a skilled person that, only for the sake of the simplification, the feature space in Fig. 1 contains only two features M1 and M2. Depending on the number of measurement values and the transformation instruction the number of dimensions of the feature space can be higher.

Two different variants of distribution plots DP may be used to evaluate the performance of the classification model. The first variant is shown in Fig. 2 where all values of the feature space are drawn within one bar. On the top of the bar the name of the contingency NoC, optionally together with an indication of the location, is visualized. In the example of Fig. 2 the name of the contingency NoC is "BT_001". The second type of visualization uses two bars which are visualized side by side. In this visualization all values of the feature space are divided into two categories. The similarity values of the points which belong, for example, to the same category as the reference category, are drawn in a first, left bar 31 and all remaining similarity values are drawn in a second bar 32 right next to the first one. This is especially helpful if the analysis question is to find out whether the nearest neighbor of a point in the classification space is of the same category or another category and what the local neighborhood of a point looks like in terms of the categories of the points, i.e. how far are contingencies of different types in comparison to contingencies of the same type. It is to be understood that splitting the values into two categories could be done by any categorical feature that has been assigned to the points.

In the example illustrated in Fig. 1 the highest line 33 in the second, right bar 32 is the closest to the reference line 34 which is the highest line in the first, left bar 31. This means that the reference line 34 and its closest neighbor refer to different categories which might make it difficult to make a correct classification with regard to a real contingency.

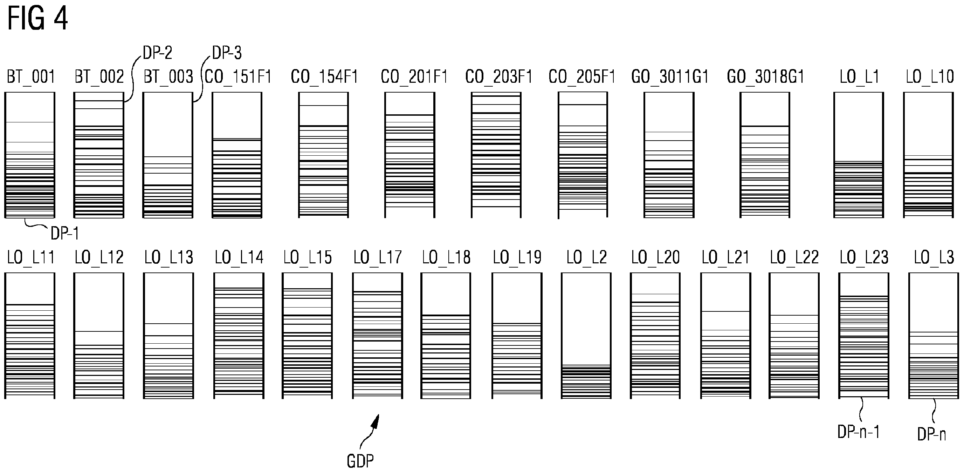

In general, each contingency is represented by a single distribution plot DP-i (i = 1, ..., n) with the contingency's name NoC as a label above the plot. The distribution plots DP-1, ..., DP-n are arranged in a matrix from left to right and top to bottom as illustrated in Fig. 4. A default distribution could be in an alphabetical order, however, other variants may be used as well. A line break in the visualization on an output means, e.g. a monitor of a computing system, can be inserted when there is not enough space left to add the next distribution plot DP-i to the right of a raw.

In the example illustrated in Fig. 4, it is possible to see for a user that the contingencies of the type NoC = "CO" are close to other points whereas many contingencies of the type NoC = "LO" are outliers in the feature space which makes a misclassification less likely.

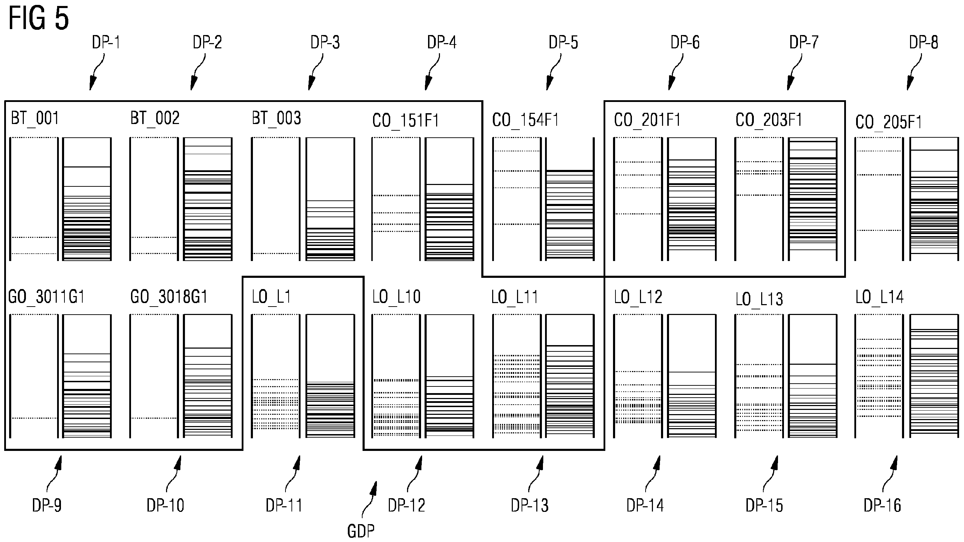

Fig. 5 shows a different visualization using distribution plots (DP-i (i = 1, ..., 16). Illustrated is an example for a paired distribution plot, i.e. using distribution plots having a first and a second bar where the values are split up as shown in Fig. 3. It can be seen that, for example, the closest neighbor for the contingency with the name NoC = "CO-154F1" is of the same type which means that in case of a misclassification chances are high that at least the type is predicted correctly. Contingencies whose nearest neighbor is of another type are marked with a shading, e.g. a red color, around the distribution plots (in the example: DP-1, DP-2, DP-3, DP-4, DP-6, DP-7, DP-9, DP-10, DP-12 and DP-13).

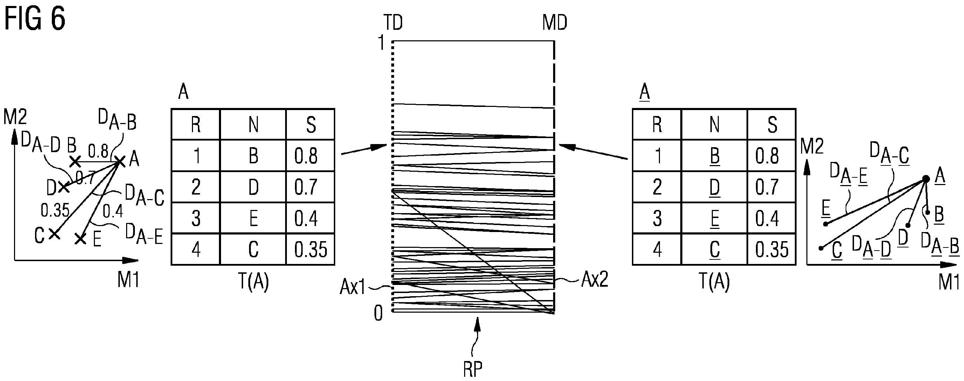

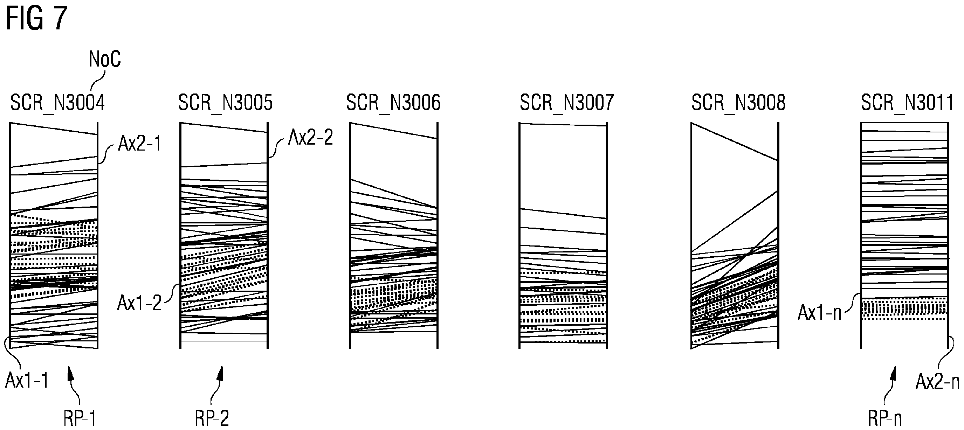

In a second embodiment, a so-called ranking plot is used for visualization purposes which is illustrated in Figs. 6 and 7. The main difference between a distribution plot DP and a ranking plot RP is that the axes Ax1, Ax2 of a ranking plot RP represent two different data sets. This means that the lines must not be parallel anymore but can also be tilted. Yet, still each line represents one contingency.

There exist two variants of ranking plots RP:
The first variant is a comparison of two feature sets to each other. In this visualization axis Ax1 represents the similarities between contingency A of a first feature set and all other contingencies of the feature set. The second axis Ax2 represents the similarities between contingency A of the second feature set and all other contingencies of the first feature set.

The second variant comprises a comparison of a query vector to a feature set. In this visualization the first axis Ax1 represents the similarities between contingency A of a first feature set and all other contingencies of the first feature set. The second axis Ax2 represents the similarities between contingency A of a second feature set and all other contingencies of the feature set.

In Fig. 6 the construction of ranking plot RP according to the first variant is illustrated. As with the distribution plot, the position of the lines on the left axes Ax1 of the first feature set TD are the same as for the distribution plot. For determining the end point of a line a comparison to the second feature set MD outlined on axes Ax2 are used. The points or similarity values of the first and the second feature sets TD and MD are determined as already described. For each feature set TD, MD the points in the feature space are established. In the example of Fig. 6 a 2-dimensional feature set consisting of features M1 and M2 are used for simplicity only. The distances D_{A-i} and thus the similarities S between a reference point A of the first feature set TD and the remaining other points in the space B, C, D, E are calculated. Afterwards, a ranking is made as shown in table T(A). In the table T(A) the rank R, the name N of a point in the space and the similarity value S are shown in a descending order.

In the same way the distances D_{A-i} between a reference point A of the second feature set MD and all other points B, C, D, E are calculated and ordered in a table T(A). The similarity values S of the second feature set MD which is for example a further simulation after a change in the wide-area electrical grid is used as the end point of a respective line. Start point and end point of a respective line relate to a feature point having the same name in the first and the second data set.

As can be seen from the ranking plot RP in the middle of Fig. 6 some lines are tilted.

Each contingency will be represented by a single ranking plot RP-i (i = 1, ..., n) with a label with the name of the contingency NoC above the plot. The arrangement of single ranking plots is the same as for the distribution plots. For illustration purposes, in Fig. 7 the number of ranking plots is n = 6. However, the number n can be much bigger according to the technical system.

In Fig. 7 it can be seen that there are many crossing lines within the different ranking plots. They can be marked in color, e.g. red. Crossing lines hint at problems with the stability of the classification algorithm when a network state occurs by the one represented by the second feature set ("MD"). This is especially problematic if the first line, i.e. the correct contingency, gets close or even under the second line on the right axis Ax of a respective ranking plot RP-i. Lines of the same type as the reference contingency may be highlighted in a given color which additionally provides the information if in case of a wrong prediction still the contingency type would be predicted correctly while the location is wrong.

As will be explained below more detailed, additional interaction facility allow a user to let single ranking plots be highlighted for which the first line starting at the left axes is not also the first line at the right axis Ax2 anymore. Those are the contingencies that definitively would be wrongly classified if the data of the first feature set is used for predicting the feature from the second data set. By ordering the ranking plots according to different criteria, e.g. the contingency type or a distance between a first and a second line on the right axis Ax2, patterns of contingencies being wrongly specified may be detected to help to find the root cause of the problems.

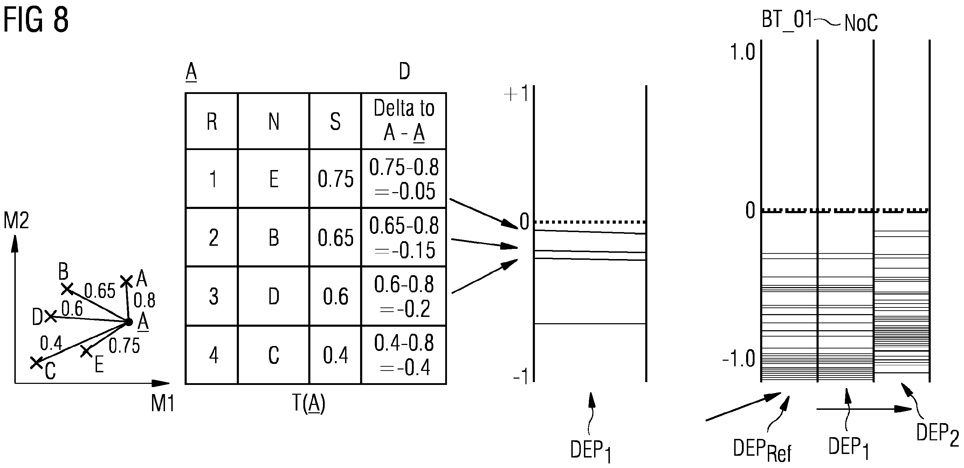

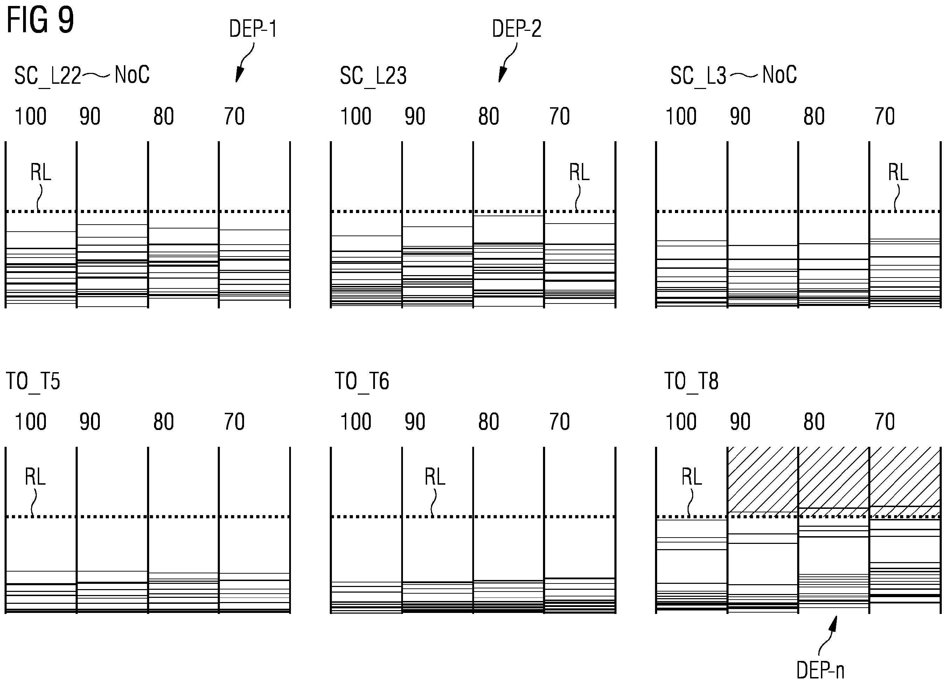

In Figs. 8 and 9, a third embodiment of visualization is illustrated. This is called a delta plot. A delta plot puts a focus on development of similarity values across different feature vector sets. It is thereby assumed that different feature vector sets form an ordered series, e.g. starting with a low load value in the wide-area electrical grid that is step-wise increased from data set to data set. A delta plot shows a delta to some value, namely the delta to a distance to the correct contingency.

For generating a delta plot, at least three data sets are needed, one of which is a reference data set. The first column of the delta plot DEP represents similarity values of the reference data set DEP_{Ref} and is basically a distribution plot whose axes range from -1 to +1 and in which all values are reduced by 1.0 (Fig. 8). The remaining columns DEP₁, DEP₂ represent the delta of one of the data sets to the reference data set. For each point a delta value is calculated. This value is then represented as a line in the column using the same technique as described for the distribution plot.

As before, in the example of Fig. 8, the feature space consists of two features M1 and M2. The points of the 2-dimensional feature vectors are indicated in the x-y-diagram and denoted with A, B, C, D and E. With regard to reference point A the procedure is as described with the distribution plot according to Fig. 1. The distance between the reference point and the reference data set and the same point in the new data set, is considered to be the reference distance is calculated. The same point in the new data set is marked with an underscore. The distance between the reference point A in the reference data set and the reference point A in the new data set is calculated. This is in the present example 0.8. This is considered to be the reference distance. Next distances between the reference point A of the new data set and all other points in the reference data set are calculated. This is outlined in column D of table T(A). The ranking of the table T(A) and the similarity values S of the reference point A with respect to all other points B, C, D, E has been calculated in the same way as outlined in Fig. 1. That means the distance between reference point A and the closest point E is 0.75, the distance between reference point A and point B is 0.65, the distance between reference point A and point D is 0.6 and the distance between reference point A and point C is 0.4. A delta D is calculated by subtracting the reference distance (0.8) from the afore calculated similarity values S. The result for each point E, B, D, C after the subtraction by 0.8 is outlined in table T(A) in column D. The result in delta values is positive if the distance from the point to the reference point A of the new data set was smaller than the distance between the reference point of the reference data set to one of the new data set. In this case a wrong prediction would have been made. In all other cases, the values are positive.

The result of this calculation of new similarity values can be transformed to bar DEP₁. This illustration with horizontal lines is added next the bar with the reference similarity values of the reference data set.

This procedure is repeated at least once. The sequence may be a result from a step-wise increase of load in the electrical grid compared to reference data in the first column.

Fig. 9 shows an example for a delta plot for different contingencies. In this case, a classification was trained with simulated data in which the network had a load of 100%, indicated by "100". Columns 2 to 4 show the classification results that would occur if the classification model that was trained with a load of 1.0 was used to classify a contingency that occurred when the network load had decreased to 90% ("90"), 80% ("80") or 70% ("70"). The further the reference lines are away from the respective reference line RL, the classification algorithm which is based on transformation instructions would classify the contingency correctly at the changed network state. If there are lines above the reference line RL (see NoC = "TO_T8"), the classification would be wrong at the changed network state. It is possible to highlight such plots by color, e.g. in yellow. This easies analysis because they are most important items for answering questions like "How much may a load (or any other network characteristic) be changed before a new classification model has to be calculated?" or "Which contingencies are most sensitive to this kind of changes?". The contingency NoC = "SC_L22" shows an example for a contingency that is not yet misclassified at the load level of 70% but that gets closer to this state the more the load is decreased.

The interaction with the different plots as described above is part of the analysis process. Most importantly, interestingness measures can be used to filter the view and highlight relevant data for analysis. This way the eye of a user is guided to quickly evaluate the data. There is a plurality of interactions which can be used to select specific information so that a user is able to understand visualization and the classification algorithm behind that in a best way.

The visualization of the plots as described above is output on an output means, such as a monitor of a computer system. Interaction by the user is made by an input means, such as a keyboard, a mousepad, a trackpad and so on.

The interactions comprise highlighting of lines. In one alternative all lines which represent a contingency of the same type as the reference contingency can be highlighted according to an input operation of the user via the input means. In another alternative all lines which represent a contingency of a specific user-defined type may be highlighted upon receiving a command via the input means.

The interactions may comprise a highlighting of plots. For distribution plots and ranking plots, highlighting can be made such that all of them for which the nearest neighbor has a different type than the reference contingency are highlighted. For ranking plots, highlighting may be made if the nearest neighbor got closer to the reference contingency in the comparison data set compared to the reference data set. In ranking plots a highlighting may be made if a prediction gets wrong when using the reference data set to classify the comparison data set that is a snapshot of the network at a later point in time. For delta plots, highlighting may be made if a prediction is wrong, i.e. the upper part of a column is highlighted if there is at least one line above the reference line. Highlighting of plots may be made automatically as a result of a computer-assisted analyzation of the data visualized by the plots.

An interaction may comprise the change of the range of the axes. A user can set a threshold which cuts the plots at the bottom at a certain value. Upon receiving such a command via the input means the range of the axes is changed by the computer, resulting in an amended visualization of the plot(s). Setting the value to 0.0, for example as a default, results in visualizing all values. Only values which are larger than the threshold are shown. The height of the rectangles does not change if the threshold changes but the axes do not start with the former threshold value anymore but with the new threshold value. This results in an enlarged space to draw the lines with the effect that they are visually spread out. Additionally, in a delta plot an upper threshold may be set as well.

The interaction may comprise an ordering of the single plots. This may be done by contingency name (e.g. alphabetically), by contingency type (for example, alphabetically), by distance to the nearest neighbor (for distribution plot and ranking plot) or by the largest distance from a line to the reference line for the delta plot.

Interactions may comprise of filtering of lines and/or plots by contingency type and/or by contingency location.

Another kind of interaction is a linkage to another line plots by making visualization by same ordering or same filtering or same plot highlighting.

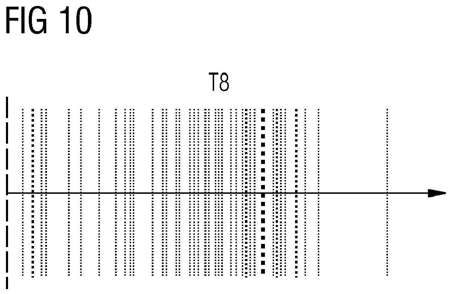

Furthermore, an interaction may comprise a selection of a detailed view and its components. This might be in form of a tabular representation of the values of a single plot. Alternatively, a single plot can be enlarged and inspected in detail. A topological map on which the positions within the topology are marked for all contingencies that are selected in other visualizations of the detailed view may be part of this kind of interaction. Moreover, a so-called impedance stripe, as shown in Fig. 10, can be displayed showing an electrical distance from the reference contingency to all other contingencies. In Fig. 8, each line represents one contingency and is placed at a distance from the left end of the axes which is proportional to the electrical distance between the reference contingency represented by the line.

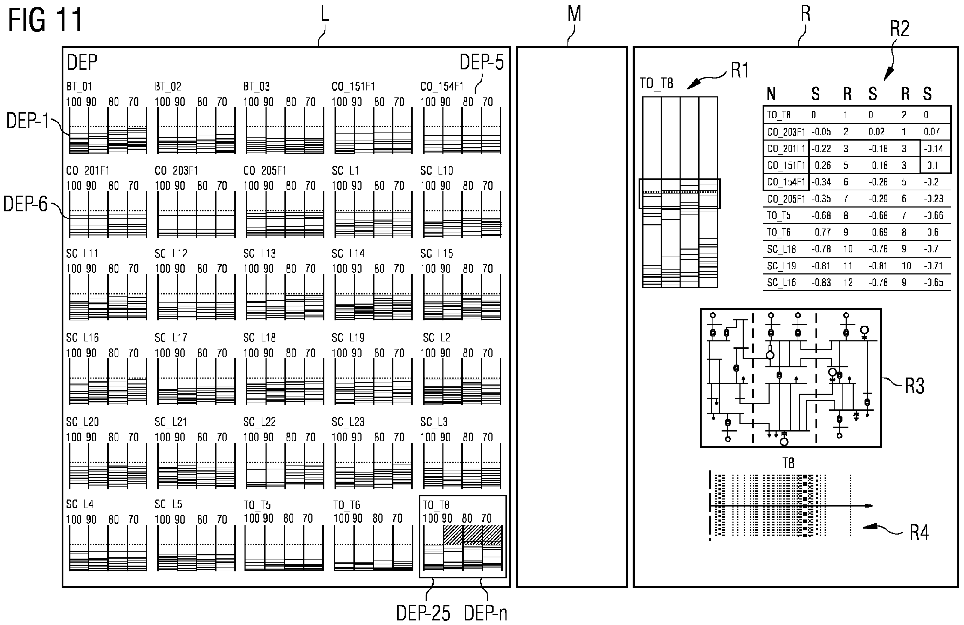

Fig. 11 shows an example for a visualization which is output on an output means of a computer system enabling an interaction with the plots. In this visualization, it consists of a three main parts. In the most left side of the visualization a plurality of delta plots DEP-n is displayed. The delta plot DEP-n = DEP-25 in the below right corner of this section is highlighted in color, for example orange, to indicate that a classification would be wrong at a changed network state. In a middle section interaction information is displayed which enables a user to highlight plots, change the range of the axes, change the order of the plots, filter lines and/or plots or to select specific information to be displayed in more detail in the right side R of the visualization. For example, the delta plot DEP-25 whose classification seems to be wrong can be viewed in more detail on the right hand side R. The detailed information can be graphically assisted by enlarging the scale of the axes (R1) and/or providing a table (R2) with similarity information and/or illustrate the location in the electrical grid (R3) and can consist of the above mentioned impedance stripe (R4) to enable a user to analyze the selected plot.

## Claims

1. A method for computer-assisted determination of the performance of a classification model representing a technical state of a technical system, wherein
the classification model consists of a plurality of multi-dimensional feature vectors (A, B, C, D, E) in a multi-dimensional space, wherein each of the feature vectors (A, B, C, D, E) represents a set of measurement values at a certain location out of a plurality of locations of the technical system that result from a simulated or a real contingency, comprising the steps of:
- providing a transformation instruction;
- transforming each set of measurement values of a certain state of the technical system at a certain location into a feature vector by means of the transformation instruction, resulting in the classification model with the plurality of multi-dimensional feature vectors;
- visualizing values of at least some of the feature vectors on an output means using a parallel coordinate plot-visualization technique for an analysis of a user;
- reading an adapted transformation instruction in response to a user input of a user interface resulting from the analysis.

2. The method according to claim 1, wherein the parallel coordinate plot-visualization technique uses a visualization, in which the distribution of similarity values between a particular feature vector as a reference feature vector in the high-dimensional vector space and all other feature vectors is visualized by representing each similarity value by graphical sign.

3. The method according to claim 1 or 2, wherein the parallel coordinate plot-visualization technique uses a distribution plot, in which the distribution of similarity values between a particular feature vector as a reference feature vector in the high-dimensional vector space and all other feature vectors is visualized by representing each similarity value between two parallel axes having the same scale.

4. The method according to claim 3, wherein each feature vector belongs to a specific type of contingency that can occur in the technical system.

5. The method according to claim 3 or 4, wherein all similarity values irrespective of their type of contingency are drawn in a common bar of the distribution plot.

6. The method according to one of claims 3 to 5, wherein the similarity values are split up into a first and a second category wherein values of a certain type of contingency are assigned to the first category and values of the remaining types of contingencies are assigned to the second category, the values of the first category are drawn in a first bar and the values of the second category are drawn in a second bar neighboring the first bar.

7. The method according to one of claims 3 to 6, wherein each contingency is represented by a single distribution plot.

8. The method according to one of claims 3 to 7, wherein the distribution plots are arranged in an array.

9. The method according to one of the preceding claims, wherein the parallel coordinate plot-visualization technique uses a ranking plot, in which the distribution of similarity values between a particular feature vector as a reference feature vector in the high-dimensional vector space and all other feature vectors is visualized by representing each similarity value between two parallel axes representing different feature vectors of the same type of contingency.

10. The method according to claim 9, wherein a first axis of the ranking plot represents the similarities between a particular first feature vector as a reference feature vector in the high-dimensional vector space and all other feature vectors of a first set of feature vectors and a second axis of the ranking plot represents the similarities between a particular second feature vector as a reference feature vector in the high-dimensional vector space and all other feature vectors of a second set of feature vectors.

11. The method according to claim 9, wherein a first axis of the ranking plot represents the similarities between a particular first feature vector as a reference feature vector in the high-dimensional vector space and all other feature vectors of a first set of feature vectors and a second axis of the ranking plot represents the similarities between a particular second feature vector as a reference feature vector in the high-dimensional vector space and all other feature vectors of the first set of feature vectors.

12. The method according to claim 10 or 11, wherein each contingency is represented by a single ranking plot.

13. The method according to one of the preceding claims, wherein the parallel coordinate plot-visualization technique uses a delta plot, in which the temporal development of the distribution of similarity values between at least three different feature vector sets is visualized by forming an ordered series of distribution plots.

14. The method according to claim 13, wherein a first of the at least three different feature vector sets is a reference data set whose values are visualized by a distribution plot, in which the distribution of reference similarity values between a particular feature vector as a reference feature vector in the high-dimensional vector space and all other feature vectors of the reference data set is visualized by representing each similarity value between two parallel axes.

15. The method according to claim 13 or 14, wherein the remaining of the at least three different feature vector sets represent the distribution of similarity values under a respective predetermined change of the technical system.

16. The method according to one of claims 13 to 15, wherein in the delta plot, a subsequent data set following the reference data set or a previous data set visualizes the distances between a value of the reference feature vector of the subsequent data set and all other values of the reference data set, wherein a respective calculated reference distance is subtracted from each distance value.

17. The method according to one of claims 13 to 16, wherein a frequency at which the step of transforming each set of measurement values has to be performed is determined from the analysis of the temporal development of the distribution of similarity values.

18. The method according to one of the preceding claims, wherein the visualization is adapted in response to a user input.

19. The method according to claim 18, wherein the adaption of the visualization comprises removing and/or highlighting and/or filtering and/or ordering and/or enlargements or detailed views of displayed plots and/or values.

20. A computer system comprising means for carrying out the method according to one of the preceding claims.

21. A computer program product directly loadable into the internal memory of a digital computer, comprising software code portions for performing the steps of one of claims 1 to 19 when said product is run on a computer.
